# FASCICULE DE BREVET EUROPEEN

(11) **EP 4 274 779 B1**
(45) Date de publication et mention de la délivrance du brevet: **16.07.2025**
(21) Numéro de dépôt: 22704405.4
(22) Date de dépôt: 07.01.2022
(51) Int. Cl.: B64C 3/10, B64C 3/00

(54) **DISPOSITIF D'ATTENUATION ACOUSTIQUE AMELIORE POUR ENSEMBLE PROPULSIF D'AERONEF**
VERBESSERTE SCHALLDÄMPFUNGSVORRICHTUNG FÜR EINE FLUGZEUGANTRIEBSEINHEIT
IMPROVED ACOUSTIC ATTENUATION DEVICE FOR AN AIRCRAFT PROPULSION UNIT

(30) Priorité: 11.01.2021 FR 2100212
(43) Date de publication de la demande: 15.11.2023
(73) Titulaire: SAFRAN AIRCRAFT ENGINES, 75015 Paris (FR)
(72) Inventeur: GEA AGUILERA, Fernando, 77550 MOISSY-CRAMAYEL (FR); DUBOIS, Adrien, Clément, Marcel, 77550 MOISSY-CRAMAYEL (FR); BOITEUX, Jean-Michel, Daniel, Paul, 77550 MOISSY-CRAMAYEL (FR); WIART, Ludovic, Mathieu, René, 77550 MOISSY-CRAMAYEL (FR)
(74) Mandataire: Cabinet Beau de Loménie
(86) Numéro de dépôt international: PCT/FR2022/050047
(87) Numéro de publication internationale: WO 2022/148940

(56) Documents cités:
- WO-A1-2019/158876
- WO-A1-2020/079335
- CN-A- 101 716 995
- FR-A1- 3 044 292
- US-A- 2 048 399
- US-A- 2 358 985
- US-A1- 2006 060 721

## Description

### Domaine Technique

La présente invention se rapporte au domaine général des turbomachines, et s'applique plus particulièrement aux turboréacteurs et turbopropulseurs d'aéronefs de type à grands diamètres. L'invention concerne en particulier un ensemble propulsif pour aéronef comprenant un tel turboréacteur et/ou turbopropulseur.

### Technique antérieure

Il est envisagé, pour les nouvelles générations d'avions commerciaux, d'utiliser des turboréacteurs à grand taux de dilution (« ByPass Ratio » -BPR- en anglais), par exemple des taux de dilution supérieurs à 10, et à grand diamètre, c'est-à-dire présentant des diamètres supérieurs à 1.5 m, afin d'augmenter le rendement propulsif des turboréacteurs et de diminuer leur consommation de carburant, ainsi que les émissions de gaz polluants. On notera que le terme « turbomachine », englobant les « turboréacteurs » et les turbopropulseurs », désigne un appareil à turbine à gaz fournissant par réaction à l'éjection à grande vitesse de gaz chaud, une poussée qui contribue à la propulsion.

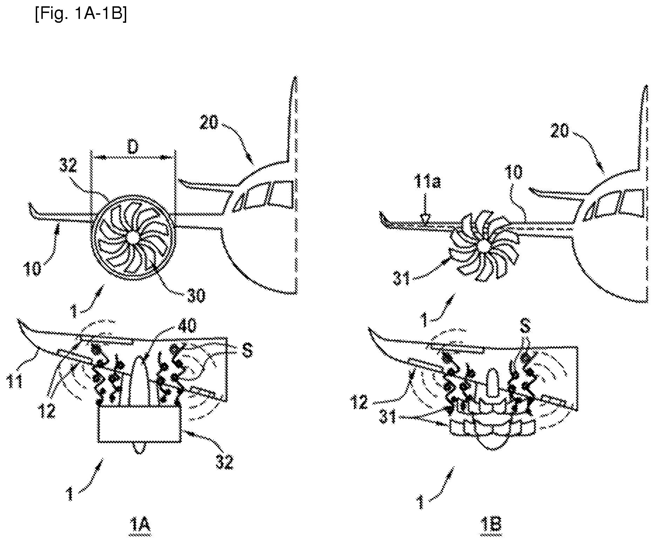

Différents types de turbomachines, notamment de turboréacteurs, carénés et non carénés, peuvent être utilisés :
- « Ultra High Bypass Ration » (UHBR) : turboréacteur caréné avec une roue de soufflante à calage fixe, avec ou sans boitier de réduction de vitesse de la soufflante, telle qu'illustré sur la figure 1A,
- « Variable Pitch Fan » (VPF) : turboréacteur caréné avec une soufflante à calage variable,
- « Counter Rotating Open Rotor » (CROR) : turboréacteur non-caréné avec deux hélices (au moins) contrarotatives à calage variable, telle qu'illustré sur la figure 1B,
- « Unducted Stator Fan » (USF) : turboréacteur non-caréné avec une roue d'hélice à calage variable et une roue de redresseur (stator) à calage fixe ou variable.

Des turbopropulseurs non carénés peuvent être également utilisés. On notera que le terme « turbopropulseur » désigne un appareil à turbine à gaz dont la poussée est principalement obtenue par la traction de l'hélice à calage variable.

Cependant, un inconvénient majeur de ces architectures intégrées sur des avions commerciaux est leur impact acoustique, c'est-à-dire les niveaux de bruit. Les niveaux sonores émis par les avions sont soumis à des réglementations internationales de plus en plus strictes lors des phases de décollage et d'atterrissage, afin de limiter l'emprunte acoustique au voisinage des aéroports.

L'une des sources de bruit principales sur les turboréacteurs et sur les turbopropulseurs à grand diamètre est liée à leur intégration ou leur installation sur avion, notamment sur ou sous l'aile. Les figures 1A et 1B illustrent deux exemples de turboréacteurs (carénés et non-carénés) à grand diamètre D>1,5 m, intégrées sur une voilure 10 d'aéronef. Le turboréacteur 1 est fixé sur la voilure 10 de l'aéronef, par l'intermédiaire d'un mât 40, la voilure 10 étant elle-même fixée au fuselage 20 de l'aéronef. Le turboréacteur 1 caréné (figure 1A) comprend une soufflante 30 entourée par une nacelle 32. Le turboréacteur 1 non-caréné (figure 1B) comprend deux hélices contrarotatives 31.

L'intégration de ces turboréacteurs et/ou turbopropulseurs à grand diamètre augmente l'interaction de l'écoulement d'air accéléré par la partie tournante, c'est-à-dire par la soufflante 30 ou les hélices 31 du turboréacteur (qui produit un jet d'air à grand vitesse), avec la voilure 10 (notamment le bord d'attaque 11, et en particulier la ligne de bord d'attaque 11a), le mât moteur 40 (ou pylône), des dispositifs hypersustentateurs 12, et d'autres éléments de l'avion qui génèrent des sources de bruit supplémentaires. En effet, les dimensions de ces turboréacteurs sont telles que la partie tournante est disposée en amont du bord d'attaque 11 de la voilure 10, et en vis-à-vis de celle-ci, de telle sorte que les écoulements turbulents générées dans le sillage de la soufflante 30 (ou des hélices 31) impactent directement le bord d'attaque 11. Les écoulements turbulents générées dans le sillage de la soufflante 30 ou des hélices 31 sont représentées par les spirales S sur les figures 1A et 1B, et le bruit généré est représenté par les arcs de cercle en traits interrompus. Il convient de noter que l'interaction jet-voilure produit du bruit à large bande.

De plus, cette architecture de turboréacteur et/ou turbopropulseur présente une nacelle 32 courte et mince, dans le cas d'un turboréacteur caréné (type UHBR ou VPF), et la nacelle peut même être absente dans le cas d'un turboréacteur non-caréné (par exemple, type CROR). Cela implique une réduction importante des surfaces pouvant accueillir des traitements acoustiques, tels que des résonateurs type nid d'abeille ou des matériaux absorbants, et donc des moyens de réduction de bruit. WO 2020/079335 A1 divulgue un exemple de structure pour le traitement acoustique de profils d'aéronefs.

Il existe donc un besoin pour un dispositif permettant de palier au moins en partie les inconvénients précités.

### Exposé de l'invention

Le présent exposé concerne un ensemble propulsif pour aéronef comprenant une turbomachine ayant au moins une partie tournante configurée pour tourner autour d'un axe de rotation de la turbomachine, un mât d'accrochage, et une voilure d'aéronef portant la turbomachine par l'intermédiaire du mât d'accrochage, la au moins une partie tournante étant disposée en amont de la voilure et du mât d'accrochage de telle sorte qu'un jet d'air sortant de la partie tournante, dans le sillage de celle-ci, impacte ladite voilure et ledit mât d'accrochage, un bord d'attaque de ladite voilure comprenant localement au moins un dispositif d'atténuation acoustique disposé au moins en partie dans le sillage de la partie tournante, le dispositif d'atténuation acoustique étant une modification locale de la structure et/ou du profil du bord d'attaque , et s'étendant sur une distance L le long du bord d'attaque de la voilure, de telle sorte que L<2.5D, où D est le diamètre de la partie tournante de la turbomachine.

Dans certains modes de réalisation, la turbomachine est un turboréacteur ou un turbopropulseur. Dans le présent exposé, les termes « amont », « aval » et leurs dérivés sont définis selon un sens d'écoulement normal de l'air à travers la turbomachine, le long de la direction axiale de la turbomachine, c'est-à-dire le long de l'axe de rotation de celle-ci. Par exemple, lorsque la partie tournante est une soufflante de la turbomachine, et l'élément de structure est une voilure d'aéronef, la soufflante est disposée en amont de la voilure, notamment du bord d'attaque de la voilure, de telle sorte que l'air est d'abord aspiré par la soufflante, puis expulsé vers l'aval de la soufflante, en direction de la voilure.

De plus, on comprend par « disposé dans le sillage » qu'une partie du bord d'attaque de la voilure est disposée sur le passage de l'air expulsé par la soufflante et s'écoulant en aval de celle-ci, et impactant par conséquent ladite partie du bord d'attaque.

Par ailleurs, par « localement », on comprend que le dispositif d'atténuation acoustique ne s'étend pas sur toute la longueur du bord d'attaque de l'élément de structure, mais seulement sur une portion de ce bord d'attaque. En d'autres termes, la structure et/ou le profil du bord d'attaque n'est modifié que localement, notamment dans le sillage de la partie tournante, en aval de celle-ci. De préférence, au moins 30% de la longueur du bord d'attaque de l'élément de structure ne comprend pas le dispositif d'atténuation acoustique.

De préférence, une grande partie du dispositif d'atténuation acoustique est disposée dans le sillage de la partie tournante, par exemple au moins 70% de la longueur dudit dispositif le long du bord d'attaque.

Le fait de disposer ce dispositif d'atténuation acoustique, au moins en partie, dans le sillage de la partie tournante, permet d'atténuer le bruit engendré par l'air impactant le bord d'attaque de l'élément de structure et/ou du mât d'accrochage. En particulier, l'ensemble propulsif selon le présent exposé permet de réduire l'impact acoustique d'une turbomachine carénée ou non-carénée, lorsque celle-ci est installée sous ou sur l'aile d'un avion. En outre, le fait de modifier le bord d'attaque de l'élément de structure, par exemple une voilure d'aéronef, uniquement localement, permet de limiter l'influence de ce dispositif sur l'aérodynamique de la voilure et sur les performances de l'avion, en particulier lorsque ces modifications se trouvent sur une partie mobile de la voilure. De plus, cette modification locale permet d'adapter les dispositifs de réduction de bruit aux propriétés locales de l'écoulement (ou jet) qui impacte le bord d'attaque de la voilure. Par ailleurs, le fait de modifier la structure et/ou le profil du bord d'attaque fait de ce dispositif un dispositif de réduction de bruit passif, ne nécessitant pas de prélèvements d'air ou capteurs actifs dédiés ayant un coût énergétique.

Dans certains modes de réalisation, la modification locale de la structure et/ou du profil du bord d'attaque n'est pas uniforme le long d'une ligne de bord d'attaque.

Il est ainsi possible d'adapter la forme et/ou la structure du bord d'attaque localement, en fonction des propriétés locales de l'écoulement, ou jet d'air qui impacte le bord d'attaque.

Dans certains modes de réalisation, le dispositif d'atténuation acoustique comprend des ondulations le long du bord d'attaque, les ondulations présentant une succession de creux et de sommets.

De préférence, une ondulation comprend au moins deux creux et au moins deux sommets. On comprend que les « creux » et les « sommets » sont considérés selon la direction de la corde de l'élément de structure, cette dernière étant sensiblement parallèle à l'axe de rotation de la turbomachine. Par conséquent, les creux sont des régions où la corde de l'élément de structure est plus faible qu'au niveau des sommets. Ces ondulations, ou serrations, constituent une modification locale du profil du bord d'attaque, et donc une solution passive d'atténuation du bruit.

Dans certains modes de réalisation, une amplitude h(z) des ondulations et/ou un espacement λ(z) entre deux sommets successifs des ondulations varie le long de du bord d'attaque en fonction d'une distance E, la distance E étant une distance entre une position z le long du bord d'attaque et la partie tournante, selon une direction parallèle à l'axe de rotation.

On comprend qu'une amplitude h(z) des ondulations correspond, à une position z donnée le long du bord d'attaque, à la distance entre le fond du creux de l'ondulation et son sommet les plus proches de cette position z, cette distance étant considérée selon une direction parallèle à l'axe de rotation. De même, l'espacement λ(z) correspond à la distance, à une position z donnée le long du bord d'attaque, entre deux sommets (ou deux creux) d'une ondulation les plus proches de cette position z.

La distance entre la partie tournante et le bord d'attaque n'étant pas constante le long de la ligne de bord d'attaque, l'impact de l'air sur le bord d'attaque et donc les propriétés locales de l'écoulement varient par conséquent également en fonction de cette distance. Le fait de modifier l'amplitude des ondulations et/ou l'espacement entre deux sommets successifs des ondulations permet ainsi d'adapter le dispositif en fonction de cette distance, et donc en fonction des propriétés de l'écoulement.

Dans certains modes de réalisation, l'amplitude h(z) des ondulations est telle que 0.005c(z) < h(z) < 0.5c(z), c(z) étant la valeur d'une corde de l'élément de structure ou dudit mât d'accrochage en fonction d'une position z le long du bord d'attaque. Cette relation permet de limiter l'impact mécanique des ondulations, ou serrations.

Dans certains modes de réalisation, le dispositif d'atténuation acoustique est tel que le bord d'attaque comprend localement un matériau poreux.

Le matériau poreux peut être une mousse métallique. Les matériaux poreux tels que les mousses métalliques présentent l'avantage d'avoir de bonnes propriétés acoustiques, et d'être efficaces pour réduire le bruit à large bande, particulièrement à basses fréquences. Cette configuration correspond à une modification locale de la structure du bord d'attaque, faisant également de ce dispositif un dispositif d'atténuation acoustique passif. De préférence, les dimensions et positions de la ou des région(s) du bord d'attaque présentant ce matériau sont similaires à celles définies dans le cas des ondulations, notamment les dimensions L, correspondant à la longueur, le long de la ligne de bord d'attaque, sur laquelle s'étend le matériau poreux, et h, correspondant à la longueur de ce matériau poreux, dans la direction de la corde de l'élément de support.

Dans certains modes de réalisation, le matériau poreux présente un taux de porosité t(z) variable le long du bord d'attaque.

Le taux de porosité est le rapport du volume occupé par de l'air sur le volume total du matériau poreux. De la même façon que pour les ondulations, ces variations du taux de porosité permettent d'adapter les propriétés absorbantes du matériau en fonction des propriétés de l'écoulement du jet/sillage généré par les pales/aubes de la partie tournante disposée en amont de l'élément de structure. Le taux de porosité est de préférence plus faible pour les matériaux poreux les plus proches d'un fuselage de l'aéronef, que pour les matériaux poreux les plus éloignées du fuselage, lorsque le dispositif d'atténuation acoustique est appliqué à une voilure d'aéronef.

Dans certains modes de réalisation, les espaces entre deux sommets des ondulations sont remplis au moins partiellement par un matériau poreux.

Cette configuration permet de combiner une modification du profil, et une modification de la structure du bord d'attaque, améliorant ainsi davantage l'efficacité du dispositif d'atténuation acoustique du dispositif.

Le dispositif d'atténuation acoustique s'étendant sur une distance L le long du bord d'attaque de la voilure, de telle sorte que L<2.5D, où D est un diamètre de la partie tournante de la turbomachine.

Dans certains modes de réalisation, les espacements λ(z) entre deux sommets successifs et/ou les amplitudes h(z) des ondulations sont plus faibles pour les ondulations les plus proches d'un fuselage de l'aéronef, que pour les ondulations les plus éloignées du fuselage.

Lorsque l'élément de structure est une voilure fixée à un fuselage, les distances entre le bord d'attaque de la voilure et la partie tournante son généralement plus faibles à proximité du fuselage, c'est-à-dire à proximité de l'emplanture, ou encastrement de la voilure. Par conséquent, le fait de diminuer les espacements entre deux sommets successifs, autrement dit la longueur d'onde des ondulations, et/ou les amplitudes des ondulations, permet au dispositif d'atténuation acoustique de s'adapter à cette configuration.

Dans certains modes de réalisation, le au moins un dispositif d'atténuation acoustique comprend un unique creux, le creux s'étendant sur une distance L le long du bord d'attaque de la voilure, telle que L ≤ 2.5D.

Selon cette configuration, la modification du bord d'attaque ne se présente pas sous la forme d'une ondulation (comprenant au moins un creux et un sommet), mais comprend un unique creux, s'étendant sur une distance plus importante, le long de la ligne de bord d'attaque, qu'un creux d'une ondulation. Cette configuration permet de modifier localement le profil aérodynamique de la voilure. On notera que le bord d'attaque peut comprendre deux dispositifs d'atténuation acoustique, donc deux de ces creux, disposés à des régions différentes le long de la ligne du bord d'attaque, de préférence à l'endroit où les tourbillons de bout de pale de l'hélice impactent la voilure. De manière alternative, il est également possible de modifier localement la flèche de la voilure, augmentant ainsi localement la distance entre le bord d'attaque et la partie tournante.

L'augmentation de cette distance permet de réduire la turbulence de l'écoulement, avant d'interagir avec le bord d'attaque de la voilure, permettant efficacement de réduire le bruit. De plus, l'augmentation de la flèche diminue la corrélation des sources de bruit le long du bord d'attaque. De la même façon que pour les ondulations, l'amplitude maximale du creux h(z), autrement dit la profondeur maximale du creux, peut vérifier la relation 0.005c(z) < h(z) < 0.5c(z).

Dans certains modes de réalisation, le bord d'attaque comprend localement au moins un premier et au moins un deuxième dispositif d'atténuation acoustique s'étendant respectivement sur une distance L1 et L2 le long du bord d'attaque, de telle sorte que L1 + L2 <2.5D.

Chacun du premier et du deuxième dispositif d'atténuation acoustique peut comprendre des ondulations ou un unique creux. Par ailleurs, le nombre de dispositifs d'atténuation acoustique le long du bord d'attaque n'est pas limité à deux, mais peut être supérieur. Par exemple, un nombre n de dispositifs d'atténuation acoustique peuvent être disposés localement le long du bord d'attaque, de telle sorte que L1 + L2 + ... + Ln < 2.5D.

Dans certains modes de réalisation, un cache est configuré pour passer d'une position fermée dans laquelle le dispositif d'atténuation acoustique est recouvert par le cache, à une position ouverte dans laquelle le dispositif d'atténuation acoustique est découvert.

Le cache peut être un capot mobile, un système de « morphing » au niveau du bord d'attaque, ou un bec de bord d'attaque. Ce cache permet aux ondulations d'être visibles ou actives uniquement pendant certaines phases du vol, telles que le décollage et l'atterrissage. Cela permet de cacher les ondulations, et donc retrouver un bord d'attaque lisse en croisière, c'est-à-dire en dehors des phases de décollage et d'atterrissage. L'intérêt de cacher les ondulations en croisière est d'éliminer leur impact sur les performances aérodynamiques d'ensemble lorsque la réduction de bruit n'est pas nécessaire.

Dans certains modes de réalisation, un diamètre D de la partie tournante de la turbomachine est tel que D>1,5 m.

Dans certains modes de réalisation, la turbomachine comprend une partie fixe disposée en aval de la partie tournante, le mât d'accrochage étant fixé à la partie fixe. La partie fixe peut être un redresseur de l'écoulement sortant de la partie tournante.

Le présent exposé concerne également un aéronef comprenant l'ensemble propulsif selon l'un quelconque des modes de réalisation précédents.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1A-1B] Les figures 1A et 1B représentent des vues de face et du dessus d'ensemble propulsif selon l'art antérieur,
[Fig. 2] La figure 2 représente une vue de dessus d'un ensemble propulsif selon un premier mode de réalisation de l'invention,
[Fig. 3] La figure 3 représente une vue de dessus d'un ensemble propulsif selon un exemple modifié du premier mode de réalisation de l'invention,
[Fig. 4] La figure 4 représente une vue de dessus d'un ensemble propulsif selon un autre exemple modifié du premier mode de réalisation de l'invention,
[Fig. 5] La figure 5 représente une vue de dessus d'un ensemble propulsif selon un deuxième mode de réalisation de l'invention,
[Fig. 6] La figure 6 représente une vue de dessus d'un ensemble propulsif selon un exemple modifié combinant le premier et le deuxième mode de réalisation de l'invention,
[Fig. 7] La figure 7 représente une vue de dessus d'un ensemble propulsif selon un troisième mode de réalisation de l'invention,
[Fig. 8] La figure 8 représente une vue de dessus d'un ensemble propulsif selon un exemple modifié du troisième mode de réalisation de l'invention,
[Fig. 9] La figure 9 représente une vue de dessus d'un ensemble propulsif selon un mode de réalisation ne faisant pas partie de l'invention revendiquée,
[Fig. 10A-10C] Les figures 10A à 10C représentent différents exemples d'aéronefs, vus de face, comprenant un ensemble propulsif selon l'un quelconque des modes de réalisation de l'invention.

### Description des modes de réalisation

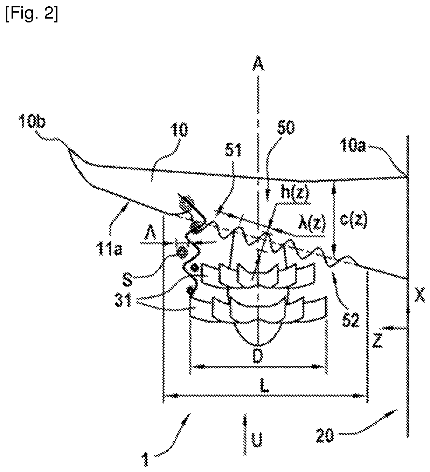

Un premier mode de réalisation du présent exposé va être décrit en référence aux figures 2 à 4. On notera que la suite de la description se réfère à un ensemble propulsif comprenant un turboréacteur. Cet exemple n'est cependant pas limitatif, l'invention pouvant également être appliquée à un ensemble propulsif comprenant un turbopropulseur.

L'ensemble propulsif illustré sur la figure 2 comprend un turboréacteur 1 non caréné ayant une partie tournante, et étant fixé à un élément de structure par l'intermédiaire d'un pylône ou mât d'accrochage 40 (non visible sur la figure 2). Dans cet exemple, l'élément de structure est une voilure 10 d'aéronef, et le turboréacteur 1 est fixé en-dessous de la voilure 10. La partie tournante du turboréacteur 1 comprend les hélices 31 contrarotatives, mobiles autour d'un axe de rotation A. Un repère spatial comprend un axe X correspondant à l'axe principal du fuselage 20, sensiblement parallèle à l'axe de rotation A, et un axe Z perpendiculaire à l'axe X, correspondant à la direction longitudinale selon laquelle s'étend la voilure 10, depuis son emplanture 10a fixée au fuselage 20, jusqu'à son extrémité opposée 10b. Le plan X-Z, correspondant à un plan horizontal, qui comprend la ligne de bord d'attaque 11a de la voilure 10, en absence d'un angle de dièdre sur la voilure. En présence d'un angle de dièdre, le plan X-Z ne serait pas horizontal, mais comprendrait la ligne de bord d'attaque 11a. Une vue de face est une vue parallèle à l'axe X, et une vue de dessus est une vue perpendiculaire au plan X-Z. De plus, un sens amont-aval correspond à un sens d'écoulement de l'air entrant à une vitesse U dans la partie tournante, puis sortant de la partie tournante, vers le bord d'attaque 11 de la voilure 10, le long de l'axe de rotation A, autrement dit selon l'axe X. Les hélices 31 sont disposées en amont du bord d'attaque 11, et en vis-à-vis de celui-ci selon l'axe X.

L'ensemble propulsif selon ce mode de réalisation diffère des ensembles illustrés sur les figures 1A et 1B, en ce qu'il comprend un dispositif d'atténuation acoustique, le dispositif d'atténuation acoustique comprenant des ondulations 50, ou serrations, localement le long de la ligne de bord d'attaque 11a. Ces ondulations s'étendent sur une longueur L le long de la ligne de bord d'attaque 11a, de sorte que L<2.5D, D étant le diamètre du turboréacteur 1, c'est-à-dire le diamètre des hélices 31 dans le cas d'un turboréacteur non-caréné, ou le diamètre de l'entrée d'air de la nacelle 32 dans le cas d'un turboréacteur caréné, équivalent au diamètre de la partie tournante. Il convient de noter que les figures n'illustrent pas des engins à échelles et proportions réelles, les dimensions du turboréacteur, notamment son diamètre D, étant volontairement exagérées, afin d'en faciliter la visibilité et la description. Par exemple, l'envergure d'une voilure/aile d'un avion commercial de 200 passagers est de l'ordre de 15 à 20 m, avec un moteur de 2 m de diamètre.

En dehors des ondulations 50, la ligne de bord d'attaque 11a présente un profil non modifié, correspondant à un profil usuel, ou profil neutre, ne comprenant pas de dispositif d'atténuation acoustique. Le profil neutre est représenté par la ligne en traits interrompus sur la figure 2. La longueur L est telle qu'une grande partie des ondulations 50, de préférence au moins 70% de la longueur L, se trouvent dans le sillage de la partie tournante du turboréacteur, c'est-à-dire dans cet exemple des hélices 31. En d'autres termes, un cylindre fictif de diamètre D et d'axe A, se prolongeant en aval des hélices 31, comprend une partie du bord d'attaque 11, et comprend notamment au moins 70% de la longueur L du dispositif d'atténuation acoustique.

Les ondulations 50 se caractérisent par une succession de creux 51 et de sommets 52. Un creux 51 correspond à un renfoncement local du bord d'attaque 11 vers l'aval, par rapport à un profil non modifié du bord d'attaque (cf. traits interrompus sur la figure 2) dans la direction de la corde c de la voilure, correspondant à la direction de l'axe X. Un sommet 52 correspond à un relief, ou avancée du bord d'attaque vers l'amont, par rapport à un profil non modifié du bord d'attaque (cf. traits interrompus sur la figure 2) dans la direction de la corde c de la voilure, correspondant à la direction de l'axe X.

Une hauteur h est une distance, dans une direction perpendiculaire à la ligne neutre de bord d'attaque 11a, ou dans une direction parallèle à l'axe moteur A, entre un creux 51 et un sommet 52 successifs, plus précisément entre le fond du creux 51 et l'extrémité du sommet 52. En d'autres termes, la hauteur h correspond à l'amplitude des ondulations 50. Une longueur λ est une distance, dans une direction parallèle à la ligne neutre de bord d'attaque 11a, entre deux creux 51 successifs (ou entre deux sommets 52 successifs). En d'autres termes, la longueur λ correspond à la longueur d'onde des ondulations 50.

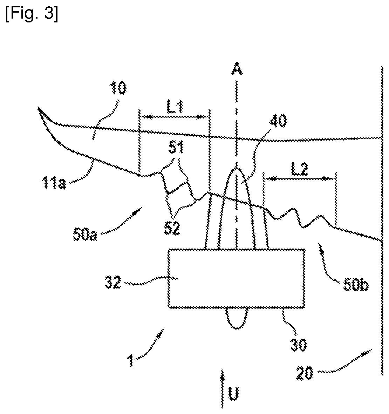

Dans l'exemple illustré sur la figure 2, l'ensemble propulsif comprend un unique dispositif d'atténuation acoustique, s'étendant sur une longueur L le long de la ligne de bord d'attaque 11a. La figure 3 illustre un exemple alternatif du premier mode de réalisation, dans lequel l'ensemble propulsif comprend deux dispositifs d'atténuation acoustique, s'étendant respectivement sur une distance L1 et L2 le long de la ligne de bord d'attaque 11a, de telle sorte que L1 + L2 < 2.5D. Selon cette alternative, le turboréacteur 1 est un turboréacteur caréné comprenant une partie tournante, dans ce cas, une soufflante 30, et une nacelle 32. Le turboréacteur 1 est fixé au-dessus de la voilure 10 par l'intermédiaire d'un mât d'accrochage 40. Les ondulations 50a, 50b respectives des deux dispositifs d'atténuation acoustique sont disposées de part et d'autre du mât 40, dans le sillage de la soufflante 30, de telle sorte que le jet d'air (non représenté à nouveau sur la figure 3 et les figures suivantes, par souci de clarté) sortant de la soufflante 30, impacte les ondulations 50a, 50b. Dans cet exemple, les ondulations 50a, 50b comprennent chacune deux creux 51 et deux sommets 52. Cependant, davantage de creux 51 et de sommets 52 sont également possibles pour chaque dispositif d'atténuation acoustique 50a, 50b.

Dans les exemples du premier mode de réalisation, illustrés sur les figures 2 et 3, les ondulations sont uniformes sur toute la longueur L, et sont également identiques sur les longueurs L1 et L2. Par « uniformes » ou « identiques », on comprend que les amplitudes h et les longueurs d'onde λ sont constantes le long de la ligne de bord d'attaque 11a.

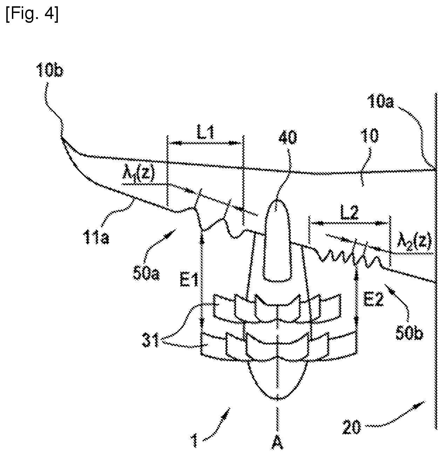

La figure 4 illustre un exemple modifié du premier mode de réalisation, dans lequel l'ensemble propulsif comprend également deux dispositifs d'atténuation acoustique. Le turboréacteur 1 est en outre un turboréacteur non-caréné, fixé au-dessus de la voilure 10. Contrairement à l'exemple illustré sur la figure 3, les ondulations 50a et 50b ne sont pas identiques, mais présentent des amplitudes h et/ou des longueurs d'onde λ différentes entre ces deux dispositifs. Plus précisément, l'amplitude h(z) et la longueur d'onde λ(z) varient en fonction de la position z le long de la ligne de bord d'attaque 11a, dans la direction Z.

On notera que les distances E1 et E2 correspondent chacune à une distance entre un point le long de la ligne de bord d'attaque 11a, par exemple un sommet 52 d'une ondulation, et la partie tournante, dans la direction X. Plus précisément, la distance E2 correspond à la distance entre la partie tournante et le bord d'attaque 11, au niveau du bord de fuite d'une première extrémité radiale de la partie tournante, correspondant à l'extrémité la plus proche du fuselage 20, et la distance E1 correspond à la distance entre la partie tournante et le bord d'attaque 11, au niveau d'une deuxième extrémité radiale de la partie tournante, diamétralement opposée à la première extrémité radiale, et correspondant à l'extrémité la plus éloignée du fuselage 20.

Compte tenu du profil de la voilure 10, dont la section diminue depuis l'emplanture 10a jusqu'à l'extrémité 10b, et de l'angle de flèche de la voilure 10, la distance E2 est plus faible à proximité du fuselage 20, que la distance E1, plus éloignée du fuselage 20. Par conséquent, la taille des vortex, caractérisés par une échelle intégrale Λ (représentée sur la figure 2), engendrés par l'écoulement turbulent en aval de la partie tournante, et impactant le bord d'attaque 11, diffère en fonction de la position z le long de la ligne de bord d'attaque 11a. En effet, à proximité du bord de fuite de la partie tournante, la largeur du sillage est faible, et caractérisée par des petits tourbillons. L'écoulement turbulent se développe ensuite en aval, augmentant peu à peu la taille des tourbillons, c'est-à-dire de l'échelle intégrale Λ. Lorsque la distance entre la partie tournante 30, 31 et le bord d'attaque 11 est plus faible, la taille des tourbillons impactant le bord d'attaque 11 est également plus faible, dans la mesure où ces tourbillons ont pu se développer dans une moindre mesure que lorsque cette distance est plus importante.

Dans ce contexte, il est donc préférable que les longueurs d'onde λ(z) et/ou les amplitudes h(z) soient plus faibles pour les ondulations plus proches du fuselage 20 de l'aéronef. Dans l'exemple illustré sur la figure 4, les longueurs d'ondes λ₁(z) des ondulations 50a et les longueurs d'ondes λ₂(z) des ondulations 50b sont telles que λ₁(z) > λ₂(z). En effet, plus la distance entre la partie tournante 30, 31 du turboréacteur et le bord d'attaque 11 de la voilure 10 est faible, plus l'échelle intégrale Λ (représentée sur la figure 2) de l'écoulement turbulent en aval de la partie tournante, diminue. Or, les amplitudes et les longueurs d'onde optimales des ondulations dépendent de cette échelle intégrale Λ de la turbulence. De préférence, les valeurs de longueur d'onde λ, en fonction de la position z le long de la ligne de bord d'attaque 11a, vérifient approximativement λ(z) = Λ(z) / 2, afin de maximiser les gains acoustiques.

L'exemple de la figure 4 illustre un cas de figure dans lequel l'ensemble propulsif comprend deux dispositifs d'atténuation acoustique 50a, 50b, les ondulations de chacun d'eux étant différentes. Cet exemple n'est cependant pas limitatif, une configuration selon laquelle l'ensemble propulsif comprend un seul dispositif, comme sur l'exemple de la figure 2, mais avec des ondulations non uniformes sur la longueur L, étant également possible. Les longueurs d'onde λ peuvent être par exemple croissantes, depuis l'extrémité des ondulations 50 la plus proche du fuselage 20, jusqu'à l'extrémité des ondulations 50 la plus éloignée du fuselage 20. En outre, l'amplitude h des ondulations 50 vérifie de préférence 0.005c(z) < h(z) < 0.5c(z), où c(z) correspond à la valeur de la corde c de la voilure 10, à une position z le long de la ligne de borde d'attaque 11a.

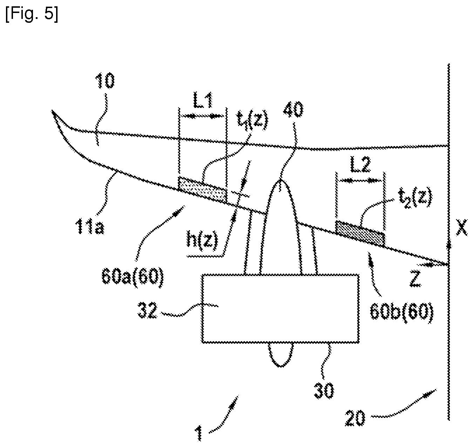

Un deuxième mode de réalisation du présent exposé va être décrit en référence à la figure 5.

L'ensemble propulsif illustré sur la figure 5 comprend un turboréacteur 1 caréné comprenant une nacelle 32 entourant une soufflante 30 et étant fixé au-dessus d'une voilure 10 par l'intermédiaire d'un pylône ou mât d'accrochage 40. L'ensemble propulsif selon le deuxième mode de réalisation diffère du premier mode de réalisation en ce que le dispositif d'atténuation acoustique est tel que le bord d'attaque 11 de la voilure 10 comprend localement un matériau poreux 60, de préférence une mousse métallique. Contrairement à la présence d'ondulations, le profil de la ligne de bord d'attaque 11a n'est pas modifié, mais la structure du bord d'attaque 11, en particulier le matériau, est modifiée localement.

De la même façon que pour le premier mode de réalisation, un seul dispositif d'atténuation acoustique peut être disposé le long du bord d'attaque sur une distance L, dans lequel le matériau poreux peut ne pas être uniforme, par exemple en présentant un taux de porosité variable le long de la ligne de bord d'attaque. Le taux de porosité est défini comme le rapport de volume occupe par de l'air sur le volume total du matériau poreux. De manière alternative, et selon l'exemple illustré sur la figure 5, deux dispositifs d'atténuation acoustique sont disposés de part et d'autre du mât 40, dans le sillage de la soufflante 30. Ces dispositifs sont tels que les matériaux poreux 60a, 60b respectifs des dispositifs d'atténuation acoustique présentent chacun un taux de porosité t₁(z) et t₂(z), respectivement, différents l'un de l'autre, et fonction de la position z le long de la ligne de bord d'attaque 11a. En particulier, le taux de porosité t₂(z) du matériau poreux 60b plus proche du fuselage 20, est plus faible que le taux de porosité t₁(z) du matériau poreux 60a, plus éloigné du fuselage 20, pour les même raisons que dans le cas des ondulations. En particulier, la variation de ces taux de porosité permet d'adapter l'atténuation du bruit en fonction de la distance entre le bord d'attaque 11 et la partie tournante. Par ailleurs, l'épaisseur h(z) du matériau poreux, c'est-à-dire la distance sur laquelle s'étend le matériau poreux dans selon l'axe X, vérifie de préférence la même relation que l'amplitude des ondulations, en fonction de la corde, c'est-à-dire 0.005c(z) < h(z) < 0.5c(z).

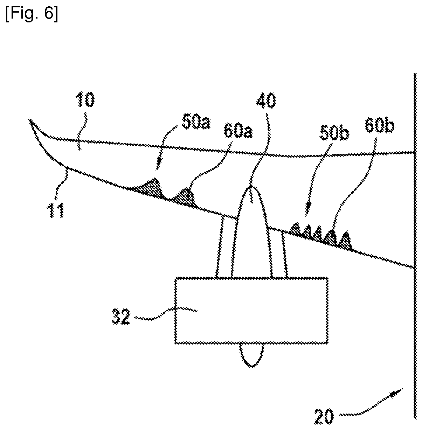

La figure 6 illustre une configuration combinant les premier et deuxième modes de réalisation du présent exposé. Selon cette configuration, l'ensemble propulsif comprend des ondulations 50a, 50b analogues aux ondulations représentées sur la figure 4, dans lesquelles les espaces entre les dents formées par les ondulations sont remplies, partiellement ou complètement, de matériau poreux, de préférence les matériaux poreux 60a, 60b tels que décrits dans le mode de réalisation illustré sur la figure 5 et présentant les mêmes caractéristiques. Cette configuration permet de ne pas modifier, ou de minimiser les modifications du profil du bord d'attaque 11 de la voilure 10.

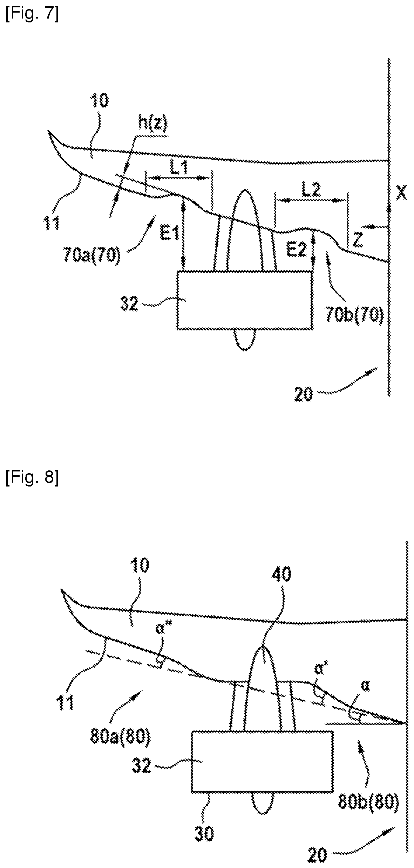

Un troisième mode de réalisation du présent exposé va être décrit en référence aux figures 7 et 8.

Selon ce mode de réalisation, le profil du bord d'attaque 11 de la voilure 10 est modifié localement, afin d'augmenter localement les distances E1, E2 entre les rotors (ou stators) de la partie tournante du turboréacteur 1 et le bord d'attaque 11 de la voilure 10. Contrairement aux ondulations selon le premier mode de réalisation, comprenant au moins un creux et au moins un sommet, le dispositif d'atténuation selon ce troisième mode de réalisation comprend localement un unique creux 70. Dans l'exemple illustré sur la figure 7, l'ensemble propulsif comprend deux dispositifs d'atténuation acoustique comprenant chacun un unique creux 70a, 70b respectivement, de part et d'autre du mât d'accrochage 40. Les creux 70a, 70b peuvent s'étendre respectivement sur une distance L1 et/ou L2 allant jusqu'à 2 fois le diamètre D du turboréacteur. Par ailleurs, comme pour les ondulations, l'amplitude maximale h(z) du creux peut vérifier la relation 0.005c(z) < h(z) < 0.5c(z).

L'augmentation locale de cette distance permet de réduire la turbulence de l'écoulement avant que celui-ci n'interagisse avec le bord d'attaque 11 de la voilure 10, et ainsi d'améliorer l'efficacité de la réduction du bruit.

De manière alternative, l'augmentation locale de la distance entre le bord d'attaque 11 et la partie tournante peut être induite par une augmentation locale 80 de la flèche α de la voilure 10, comme illustré sur la figure 8. Selon cet exemple, deux augmentations locales 80a, 80b de la flèche de la voilure 10 sont réalisées de part et d'autre du mât 40, dans le sillage de la soufflante 30. Ces augmentations 80a, 80b de la flèche sont d'une valeur α" et α' respectivement, de telle sorte que la flèche augmentée soit égale à α" + α et α' + α respectivement. La ligne en traits interrompus représente la ligne de bord d'attaque en l'absence de dispositif d'atténuation acoustique, avec une flèche non modifiée. Les valeurs valeur α' et α" sont de préférence différentes, afin d'adapter la modification de la flèche à la distance entre la soufflante 30 et le bord d'attaque 11. L'augmentation locale de la flèche permet de diminuer la corrélation des sources de bruit le long du bord d'attaque.

Les dispositifs d'atténuation acoustique selon les différents modes de réalisation de l'invention peuvent être utilisés avec des systèmes de dégivrage, qui peuvent être renforcés au niveau des creux et des matériaux poreux.

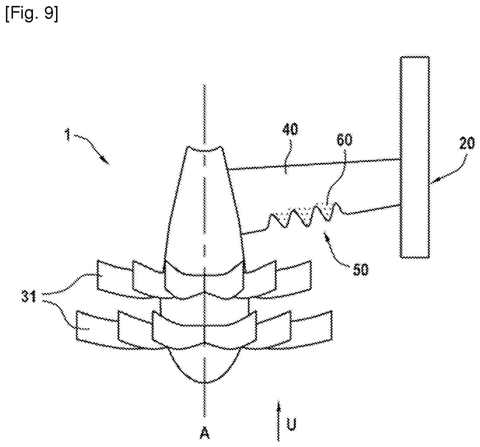

La figure 9 illustre un exemple modifié du présent exposé ne faisant pas partie de l'invention revendiquée, dans lequel le dispositif d'atténuation acoustique est disposé sur un mât d'accrochage 40, permettant de fixer un turboréacteur 1 au fuselage 20, et non sur une voilure 10. Selon cette configuration, l'élément de structure est la portion du fuselage 20 sur laquelle est fixé le mât d'accrochage 40. Cette configuration est adaptée pour des turboréacteurs installés en pointe arrière du fuselage 20, dans une configuration dite « puller », dans laquelle les hélices 31 (ou la soufflante 30 dans le cas d'un turboréacteur caréné) sont disposées à l'amont du pylône d'accrochage 40, dans le sens d'écoulement de l'air s'écoulant selon l'axe de rotation A à une vitesse U. Dans l'exemple illustré sur la figure 9, le dispositif d'atténuation acoustique comprend des ondulations 50, et un matériau poreux 60.

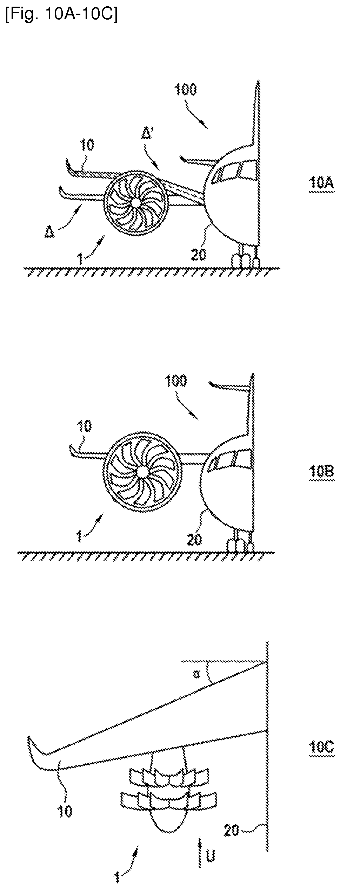

Les figures 10A à 10C illustrent différents types d'aéronefs 100, sur lesquels l'ensemble propulsif selon le présent exposé est applicable. L'invention peut notamment être utilisée pour des voilures 10 ayant des profils et formes non-conventionnelles, telles que des voilures basses dont le dièdre Δ est évolutif en envergure, notamment plus fort (dièdre Δ') sur un côté interne de la voilure 10 (figure 10A). Ce type de voilure permet d'assurer la garde au sol, c'est-à-dire la distance entre le moteur et le sol, définie dans les normes pour les moteurs à grand diamètre. La figure 10B montre un aéronef ayant une voilure 10 haute, et la figure 10C montre un aéronef dont la voilure 10 a une flèche α inversée.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. En particulier, les caractéristiques liées aux paramètres décrits dans un mode de réalisation, par exemple les hauteurs h et les longueurs L, L1 et L2, peuvent également être applicable à d'autres modes de réalisation décrit dans le présent exposé. Par conséquent, la description et les dessins doivent être considérés dans un sens illustratif plutôt que restrictif.

## Revendications

1. Ensemble propulsif pour aéronef comprenant une turbomachine (1) ayant au moins une partie tournante (30, 31) configurée pour tourner autour d'un axe de rotation (A) de la turbomachine (1), un mât d'accrochage (40), et une voilure (10) d'aéronef portant la turbomachine (1) par l'intermédiaire du mât d'accrochage (40), la au moins une partie tournante (30, 31) étant disposée en amont de la voilure (10) et du mât d'accrochage (40) de telle sorte qu'un jet d'air sortant de la partie tournante (30, 31), dans le sillage de celle-ci, impacte ladite voilure (10) et ledit mât d'accrochage (40), un bord d'attaque (11) de ladite voilure (10) comprenant localement au moins un dispositif d'atténuation acoustique (50, 60, 70, 80) disposé au moins en partie dans le sillage de la partie tournante (30, 31), le dispositif d'atténuation acoustique étant une modification locale de la structure et/ou du profil du bord d'attaque (11), et s'étendant sur une distance L le long du bord d'attaque de la voilure (10), de telle sorte que L<2.5D, où D est le diamètre de la partie tournante de la turbomachine (1).

2. Ensemble selon la revendication 1, dans lequel le dispositif d'atténuation acoustique comprend des ondulations (50) le long du bord d'attaque (11), les ondulations (50) présentant une succession de creux (51) et de sommets (52).

3. Ensemble selon la revendication 2, dans lequel une amplitude h(z) des ondulations (50) et/ou un espacement λ(z) entre deux sommets (52) successifs des ondulations (50) varie le long du bord d'attaque (11) en fonction d'une distance E, la distance E étant une distance entre une position z le long du bord d'attaque (11) et la partie tournante (30, 31), selon une direction parallèle à l'axe de rotation (A).

4. Ensemble selon la revendication 3, dans lequel l'amplitude h(z) des ondulations (50) est telle que 0.005c(z) < h(z) < 0.5c(z), c(z) étant la valeur d'une corde de la voilure (10) en fonction d'une position z le long du bord d'attaque (11).

5. Ensemble selon l'une quelconque des revendications 1 à 4, dans lequel le dispositif d'atténuation acoustique est tel que le bord d'attaque (11) comprend localement un matériau poreux (60).

6. Ensemble selon la revendication 5, dans lequel le matériau poreux (60) présente un taux de porosité t(z) variable le long du bord d'attaque (11).

7. Ensemble selon la revendication 2 ou 3, dans lequel les espaces entre deux sommets (52) des ondulations (50) sont remplis au moins partiellement par un matériau poreux (60).

8. Ensemble selon l'une quelconque des revendications 1 à 7, dans lequel le au moins un dispositif d'atténuation acoustique comprend un unique creux (70), le creux (70) s'étendant sur une distance L le long du bord d'attaque (11) de la voilure (10), telle que L<2.5D.

9. Ensemble selon l'une quelconque des revendications 1 à 8, dans lequel le bord d'attaque (11) comprend localement au moins un premier et au moins un deuxième dispositif d'atténuation acoustique s'étendant respectivement sur une distance L1 et L2 le long du bord d'attaque (11), de telle sorte que L1 + L2 <2.5D.

10. Ensemble selon l'une quelconque des revendications 1 à 9, dans lequel la turbomachine comprend une partie fixe disposée en aval de la partie tournante (30, 31), le mât d'accrochage (40) étant fixé à la partie fixe.

11. Aéronef comprenant l'ensemble propulsif selon l'une quelconques des revendications précédentes.

## Patentansprüche

1. Antriebsanordnung für Luftfahrzeug, umfassend eine Turbomaschine (1), die mindestens einen drehenden Teil (30, 31), der konfiguriert ist, um um eine Drehachse (A) der Turbomaschine (1) zu drehen, einen Aufhängungsmast (40) und eine Tragfläche (10) des Luftfahrzeugs, die die Turbomaschine (1) mittels des Aufhängungsmasts (40) trägt, wobei der mindestens eine drehende Teil (30, 31) stromaufwärts von der Tragfläche (10) und dem Aufhängungsmast (40) angeordnet ist, sodass ein Luftstrahl, der aus dem drehenden Teil (30, 31) austritt, im Nachstrom davon auf die Tragfläche (10) und den Aufhängungsmast (40) auftrifft, eine Anströmkante (11) des Flügels (10) umfassend lokal mindestens eine Geräuschdämmvorrichtung (50, 60, 70, 80), die zumindest teilweise im Nachstrom des drehenden Teils (30, 31) angeordnet ist, wobei die Geräuschdämmvorrichtung eine lokale Modifikation der Struktur und/oder des Profils der Anströmkante (11) ist und sich über eine Strecke L entlang der Anströmkante der Tragfläche (10) erstreckt, sodass L<2,50 ist, wobei D der Durchmesser des drehenden Teils der Turbomaschine (1) ist.

2. Anordnung nach Anspruch 1, wobei die Geräuschdämmvorrichtung Wellen (50) entlang der Anströmkante (11) umfasst, wobei die Wellen (50) eine Abfolge von Tälern (51) und Scheitelpunkten (52) aufweisen.

3. Anordnung nach Anspruch 2, wobei eine Amplitude h(z) der Wellen (50) und/oder ein Abstand λ(z) zwischen zwei aufeinanderfolgenden Scheitelpunkten (52) der Wellen (50) entlang der Anströmkante (11) abhängig von einem Abstand E variiert, wobei der Abstand E ein Abstand zwischen einer Position z entlang der Anströmkante (11) und dem drehenden Teil (30, 31) in einer Richtung parallel zu der Drehachse (A) ist.

4. Anordnung nach Anspruch 3, wobei die Amplitude h(z) der Wellen (50) derart ist, dass 0,005 c(z) < h(z) < 0,5 c(z), wobei c(z) der Wert einer Sehne der Tragfläche (10) abhängig von einer Position z entlang der Anströmkante (11) ist.

5. Anordnung nach einem der Ansprüche 1 bis 4, wobei die Geräuschdämmvorrichtung derart ist, dass die Anströmkante (11) lokal ein poröses Material (60) umfasst.

6. Anordnung nach Anspruch 5, wobei das poröse Material (60) einen variablen Porositätsgrad t(z) entlang der Anströmkante (11) aufweist.

7. Anordnung nach Anspruch 2 oder 3, wobei die Räume zwischen zwei Scheitelpunkten (52) der Wellen (50) zumindest teilweise mit einem porösen Material (60) gefüllt sind.

8. Anordnung nach einem der Ansprüche 1 bis 7, wobei die mindestens eine Geräuschdämmvorrichtung einen einzelnen Hohlraum (70) umfasst, wobei sich der Hohlraum (70) über eine Strecke L entlang der Anströmkante (11) der Tragfläche (10) erstreckt, wie beispielsweise L<2,5 D.

9. Anordnung nach einem der Ansprüche 1 bis 8, wobei die Anströmkante (11) lokal mindestens eine erste und mindestens eine zweite Geräuschdämmvorrichtung umfasst, die sich jeweils über einen Abstand L1 und L2 entlang der Anströmkante (11) erstrecken, sodass L1 + L2 <2,5 D.

10. Anordnung nach einem der Ansprüche 1 bis 9, wobei die Turbomaschine einen stationären Teil umfasst, der stromabwärts von dem drehenden Teil (30, 31) angeordnet ist, wobei der Aufhängungsmast (40) an dem stationären Teil befestigt ist.

11. Luftfahrzeug, umfassend die Antriebsanordnung nach einem der vorherigen Ansprüche.

## Claims

1. A propulsion assembly for an aircraft comprising a turbomachine (1) having at least one rotating part (30, 31) configured to rotate about an axis of rotation (A) of the turbomachine (1), an attachment strut (40), and an aircraft airfoil (10) carrying the turbomachine (1) via the attachment strut (40), the at least one rotating part (30, 31) being disposed upstream of the airfoil (10) and of the attachment strut (40) such that an air jet emerging from the rotating part (30, 31), in the wake thereof, impacts said airfoil (10) and said attachment strut (40), a leading edge (11) of said airfoil (10) locally comprising at least one acoustic attenuation device (50, 60, 70, 80) disposed at least partly in the wake of the rotating part (30, 31), the acoustic attenuation device being a local modification of the structure and/or of the profile of the leading edge (11), and extending over a distance L along the leading edge of the airfoil (10), such that L<2.5D, where D is the diameter of the rotating part of the turbomachine (1).

2. The assembly according to claim 1, wherein the acoustic attenuation device comprises corrugations (50) along the leading edge (11), the corrugations (50) having a succession of valleys (51) and peaks (52).

3. The assembly according to claim 2, wherein an amplitude h(z) of the corrugations (50) and/or a spacing λ(z) between two successive peaks (52) of the corrugations (50) varies along the leading edge (11) as a function of a distance E, the distance E being a distance between a position z along the leading edge (11) and the rotating part (30, 31), along a direction parallel to the axis of rotation (A).

4. The assembly according to claim 3, wherein the amplitude h(z) of the corrugations (50) is such that 0.005c(z) < h(z) < 0.5c(z), c(z) being the value of a chord of the airfoil (10) as a function of a position z along the leading edge (11).

5. The assembly according to any one of claims 1 to 4, wherein the acoustic attenuation device is such that the leading edge (11) locally comprises a porous material (60).

6. The assembly according to claim 5, wherein the porous material (60) has a porosity rate t(z) variable along the leading edge (11).

7. The assembly according to claim 2 or 3, wherein the spaces between two peaks (52) of the corrugations (50) are at least partially filled with a porous material (60).

8. The assembly according to any one of claims 1 to 7, wherein the at least one acoustic attenuation device comprises a single valley (70), the valley (70) extending over a distance L along the leading edge (11) of the airfoil (10), such that L<2.5D.

9. The assembly according to any one of claims 1 to 8, wherein the leading edge (11) locally comprises at least a first and at least a second acoustic attenuation device extending respectively over a distance L1 and L2 along the leading edge (11), such that L1 + L2 < 2.5D.

10. The assembly according to any one of claims 1 to 9, wherein the turbomachine comprises a fixed part disposed downstream of the rotating part (30, 31), the attachment strut (40) being fixed to the fixed part.

11. An aircraft comprising the propulsion assembly according to any one of the preceding claims.
